# EUROPEAN PATENT APPLICATION

(11) **EP 4 318 768 A1**
(43) Date of publication of application: **07.02.2024**
(21) Application number: 22775479.3
(22) Date of filing: 18.03.2022
(51) Int. Cl.: H01M 50/342

(54) **SEALED BATTERY**

(30) Priority: 25.03.2021 JP 2021051272
(71) Applicant: Panasonic Energy Co., Ltd., Osaka 570-8511 (JP); Panasonic Holdings Corporation, Osaka 571-8501 (JP)
(72) Inventor: OKUTANI Oose, Kadoma-shi, Osaka 571-0057 (JP); KOHIRA Kazutoshi, Kadoma-shi, Osaka 571-0057 (JP)
(74) Representative: Novagraaf International SA
(86) International application number: PCT/JP2022/012757
(87) International publication number: WO 2022/202692

(57) **Abstract**

This sealed battery is provided with a bottomed tubular outer can for accommodating an electrode body, and a sealing body for sealing an opening part of the outer can. The outer can has a gas exhaust valve (40) which ruptures when the pressure inside the battery reaches a predetermined value. The gas exhaust valve (40) includes a plurality of linear grooves (32). The sealed battery is characterized in that: the cross-sectional shape of the grooves (32) is a tapering shape in which the width of open ends (32a) on the side of the surface of the outer can is shorter than the width of the bottom (32b); the grooves (32) have at least one crossing part (33); and the crossing part (33) has a flat section (34) in the bottom.

## Description

### TECHNICAL FIELD

The present disclosure relates to a sealed battery.

### BACKGROUND ART

A sealed battery such as a non-aqueous electrolyte secondary battery is required to have a high capacity and a high output. To meet the requirements, not only an increase in battery energy density but also an increase in battery size is emerged as promising methods.

The sealed battery is provided with a gas discharge vent for discharging gas from the viewpoint of safety. PATENT LITERATURE 1 discloses a sealed battery in which cross-shaped grooves are provided, as a gas discharge vent, in a bottom of a metallic battery can, to form a thin wall portion.

### CITATION LIST

### PATENT LITERATURE

PATENT LITERATURE 1: Japanese Unexamined Patent Application Publication No. Hei 10-0923 97

### SUMMARY

### TECHNICAL PROBLEM

When the size of the gas discharge vent is increased according to an increase of the size of the sealed battery, a pressure receiving area of the gas discharge vent is increased, which makes it necessary to reduce a remaining wall thickness of each groove forming the gas discharge vent. However, when the gas discharge vent has an intersection of the grooves such as the cross-shaped grooves, the stress concentrates in the intersection, which is likely to cause breakage of the gas discharge vent, while malfunction of the gas discharge vent occurs due to impacts resulting from vibration or a drop.

It is an advantage of the present disclosure to provide a sealed battery that has a gas discharge vent configured to reliably operate when a battery internal pressure reaches a predetermined value and having high resistance to impacts.

### SOLUTION TO PROBLEM

A sealed battery according to the present disclosure comprises a bottomed cylindrical outer housing can that houses an electrode assembly, and a sealing assembly with which an opening of the outer housing can is capped. The outer housing can includes a gas discharge vent that breaks when a battery internal pressure reaches a predetermined value, and the gas discharge vent has a plurality of linear grooves. A sectional shape of each of the grooves is a tapered shape in which a width of a bottom becomes smaller than a width of an opening end on a surface side of the outer housing can, the grooves have at least one intersection, and the intersection has a flat portion at a bottom thereof.

### ADVANTAGEOUS EFFECTS OF INVENTION

According to the present disclosure, a flat portion is provided in the bottom of the intersection of the grooves forming the gas discharge vent, and therefore there can be provided a sealed battery that has a gas discharge vent configured to reliably operate when a battery internal pressure reaches a predetermined value and having high resistance to impacts.

### BRIEF DESCRIPTION OF DRAWING

FIG. 1 is a sectional view of a sealed battery of an embodiment.
FIG. 2 is a bottom view illustrating a gas discharge vent provided in a bottom of the sealed battery of an embodiment.
FIG 3A is a sectional view of a groove taken along line A-A in FIG. 2.
FIG 3B is a sectional view of a groove having another sectional shape taken along line A-A in FIG. 2.
FIG 3C is a sectional view of a groove having another sectional shape taken along line A-A in FIG. 2.
FIG. 4 is an enlarged view of an intersection of the groove in FIG. 2.
FIG. 5 is a sectional view of a flat portion taken along line B-B in FIG. 4.
FIG. 6A is an enlarged view of an intersection of grooves of another embodiment.
FIG. 6B is an enlarged view of an intersection of grooves of another embodiment.
FIG. 6C is an enlarged view of an intersection of grooves of another embodiment.
FIG. 7 is a bottom view illustrating a gas discharge vent provided in a bottom of a sealed battery of another embodiment.

### DESCRIPTION OF EMBODIMENTS

Hereinafter, embodiments of the present disclosure will be described in detail with reference to the drawings. In the following description, specific shapes, materials, directions, values, and the like, which are examples for facilitating understanding of the present disclosure, may be appropriately modified with the usage, purpose, specifications, and so on. The selective combination of components of embodiments and modified examples, which are described below, are anticipated in advance.

Hereinafter, as an example of a sealed battery, there is illustrated a non-aqueous electrolyte secondary battery, but the present disclosure may be applied to various types of sealed batteries such as a nickel hydrogen secondary battery in addition to the non-aqueous electrolyte secondary battery.

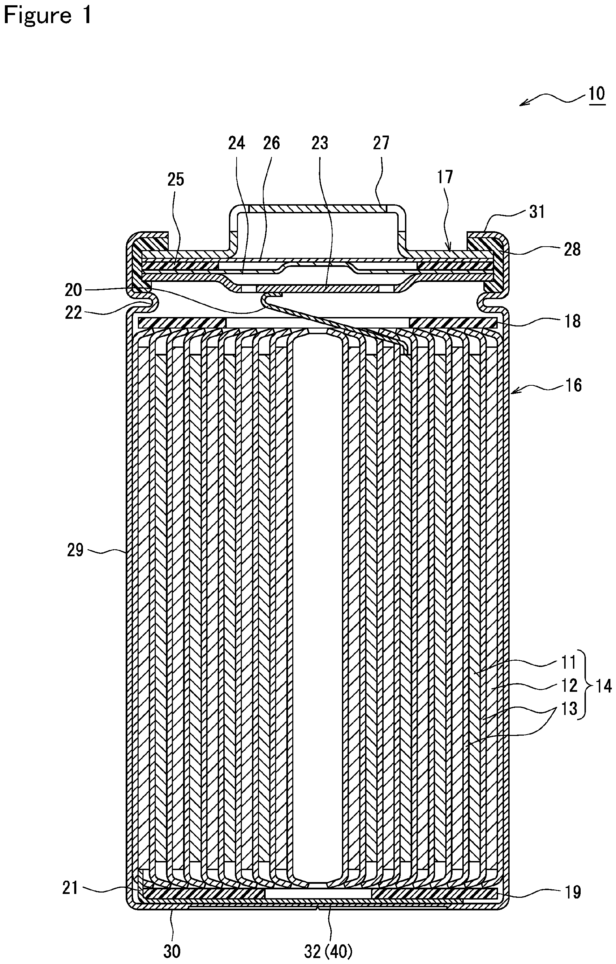

FIG. 1 is a sectional view of a sealed battery 10 according to an embodiment of the present disclosure. As illustrated in FIG. 1, the sealed battery 10 comprises a bottomed cylindrical outer housing can 16, a sealing assembly 17 with which an opening of the outer housing can 16 is capped, and a gasket 28 interposed between the outer housing can 16 and the sealing assembly 17. The sealed battery 10 comprises the electrode assembly 14 and an electrolyte that are housed in the outer housing can 16. The electrode assembly 14 includes a positive electrode 11, a negative electrode 12, and a separator 13, and has a wound structure in which the positive electrode 11 and the negative electrode 12 are spirally wound with the separator 13 interposed therebetween.

The non-aqueous electrolyte includes a non-aqueous solvent, and an electrolyte salt dissolved in the non-aqueous solvent. Examples of the non-aqueous solvent may include esters, ethers, nitriles, amides, and mixed solvents containing two or more selected from the foregoing. The non-aqueous solvent may contain a halogen-substituted product obtained by substituting at least some of hydrogen atoms in these solvents with a halogen atom such as fluorine. Note that the non-aqueous electrolyte is not limited to a liquid electrolyte and may be a solid electrolyte that uses a gel polymer or the like. As the electrolyte salt, a lithium salt such as LiPF6 is used.

The electrode assembly 14 includes the long positive electrode 11, the long negative electrode 12, and the two long separators 13. The electrode assembly 14 includes a positive electrode lead 20 joined to the positive electrode 11 and a negative electrode lead 21 joined to the negative electrode 12. The negative electrode 12 is formed into a larger size than size of the positive electrode 11 in order to suppress precipitation of lithium, and therefore is formed to be longer in the longitudinal direction and the width direction (short direction) than the positive electrode 11. The two separators 13 are each formed to be at least one size larger than the positive electrode 11, and are disposed so as to vertically interpose, for example, the positive electrode 11 therebetween.

The positive electrode 11 includes a positive electrode current collector and a positive electrode mixture layer formed on each surface of the positive electrode current collector. Examples of the positive electrode current collector may include a foil of a metal such as aluminum or an aluminum alloy, which is stable within a potential range of the positive electrode 11, and a film in which such a metal is disposed on a surface layer thereof. The positive electrode mixture layer includes a positive electrode active material, a conductive agent, and a binder. The positive electrode 11 can be produced by, for example, applying a positive electrode mixture slurry including a positive electrode active material, a conductive agent, a binder, and the like on a positive electrode current collector, drying the resulting coating film, and then compressing the coating film to form a positive electrode mixture layer on each surface of the current collector.

The positive electrode active material is mainly composed of a lithium-containing metal composite oxide. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, and W. An example of the lithium-containing metal composite oxide is preferably a composite oxide containing at least one of Ni, Co, Mn and Al.

Examples of the conductive agent included in the positive electrode mixture layer may include carbon materials such as carbon black, acetylene black, Ketjen black, and graphite. Examples of the binder included in the positive electrode mixture layer may include fluorocarbon resins such as polytetrafluoroethylene (PTFE) and polyvinylidene fluoride (PVdF), polyacrylonitrile (PAN), polyimide, acrylic resins, and polyolefin. These resins may be used in combination with cellulose derivatives such as carboxymethyl cellulose (CMC) or a salt thereof, a polyethylene oxide (PEO), or the like.

The negative electrode 12 includes a negative electrode current collector and a negative electrode mixture layer formed on each surface of the negative electrode current collector. Examples of the negative electrode current collector may include a foil of a metal such as copper or a copper alloy, which is stable within a potential range of the negative electrode 12, and a film in which such a metal is disposed on a surface layer thereof. The negative electrode mixture layer includes a negative electrode active material, and a binder. The negative electrode 12 can be produced by, for example, applying a negative electrode mixture slurry including a negative electrode active material, a binder, and the like on a negative electrode current collector, drying the resulting coating film, and then compressing the coating film to form a negative electrode mixture layer on each surface of the current collector.

As the negative electrode active material, a carbon material that reversibly occludes and releases lithium ions is generally used. A preferable carbon material is graphite including natural graphite such as flaky graphite, massive graphite, and earthy graphite, and artificial graphite such as massive artificial graphite and graphitized mesophase carbon microbeads. As the negative electrode active material, a Si-containing compound may be included in the negative electrode mixture layer. As the negative electrode active material, a metal alloyed with lithium other than Si, an alloy containing such a metal, a compound containing such a metal, and the like may be used.

As the binder included in the negative electrode mixture layer, fluorocarbon resins, PAN, polyimide resins, acrylic resins, polyolefin resins, and the like may be used as in the case of the positive electrode 11, and a styrene-butadiene rubber (SBR) or a modification thereof is preferably used. As the negative electrode mixture layer, for example, in addition to SBR and the like, CMC or a salt thereof, polyacrylic acid (PAA) or a salt thereof, polyvinyl alcohol, or the like may be included.

A porous sheet having ion permeability and an insulation property is used as the separator 13. Specific examples of the porous sheet include a microporous thin film, a woven fabric, and a nonwoven fabric. The material of the separator 13 is preferably an olefin resin such as polyethylene or polypropylene, or a cellulose. The separator 13 may have either a single layer structure or a laminated structure. A heat-resistant layer or the like may be formed on a surface of the separator 13. Note that the negative electrode 12 may include a winding start end of the electrode assembly 14, but the separator 13 generally extends beyond a winding start side end of the negative electrode 12, and a winding start side end of the separator 13 serves as the winding start end of the electrode assembly 14.

In the example illustrated in FIG. 1, the positive electrode lead 20 is electrically connected to an intermediate portion in the winding direction of a positive electrode core, and the negative electrode lead 21 is electrically connected to a winding finish end in the winding direction of a negative electrode core. However, the negative electrode lead may be electrically connected to a winding start end in the winding direction of the negative electrode core. Alternatively, the electrode assembly may have two negative electrode leads in which one of the negative electrode leads is electrically connected to the winding start end in the winding direction of the negative electrode core, and the other negative electrode lead is electrically connected to the winding finish end in the winding direction of the negative electrode core. Alternatively, a winding finish side end in the winding direction of the negative electrode core may be brought into contact with an inner surface of the outer housing can so that the negative electrode and the outer housing can are electrically connected.

As illustrated in FIG. 1, the sealed battery 10 further includes an insulating plate 18 disposed on the upper side of the electrode assembly 14, and an insulating plate 19 disposed on the lower side of the electrode assembly 14. In the example illustrated in FIG. 1, the positive electrode lead 20 attached to the positive electrode 11 extends toward the sealing assembly 17 through a through hole of the insulating plate 18, and the negative electrode lead 21 attached to the negative electrode 12 extends toward a cylinder bottom 30 of the outer housing can 16 along the outside of the insulating plate 19. The positive electrode lead 20 is connected to a lower surface of an internal terminal plate 23, which is a bottom plate of the sealing assembly 17, by welding or the like, and a cap 27, which is a top plate of the sealing assembly 17 electrically connected to the internal terminal plate 23, becomes a positive electrode external terminal. The negative electrode lead 21 is connected to an inner surface of the cylinder bottom 30 of the outer housing can 16 by welding or the like, and the outer housing can 16 becomes a negative electrode external terminal.

The outer housing can 16 is a metallic container having a bottomed cylindrical side wall 29 and the bottom 30. A portion between the outer housing can 16 and the sealing assembly 17 is enclosed by the annular gasket 28, and an internal space of the battery is sealed by the enclosure. The gasket 28 is held between the outer housing can 16 and the sealing assembly 17, and insulates the sealing assembly 17 from the outer housing can 16. The gasket 28 has a role of a sealing material for maintaining the airtightness of the inside of the battery, so as to prevent leakage of an electrolytic solution. In addition, the gasket 28 also has a role as an insulating material to prevent a short circuit between the outer housing can 16 and the sealing assembly 17.

An upper portion of the outer housing can 16 is provided with a grooved portion 22 recessed inward in the radial direction by spinning a part of a cylindrical outer circumferential surface, and an opening end of the outer housing can 16 is provided with an annular caulking portion 31. A cylindrical portion 29 houses the electrode assembly 14 and the non-aqueous electrolyte, and the caulking portion 31 is bent inward in the radial direction from an end on the opening side of the cylindrical portion 29 to extend inward in the radial direction. The sealing assembly 17 is fixed, together with the gasket 28, to the outer housing can 16 in a state being held between the caulking portion 31 and an upper side of the grooved portion 22. The bottom 30 of the outer housing can 16 is provided with a gas discharge vent 40, described later.

The sealing assembly 17 has a stacked structure of the internal terminal plate 23, a lower vent member 24, an insulating member 25, an upper vent member 26, and a cap 27. Each member constituting the sealing assembly 17 has, for example, a disk shape or a ring shape, and each member except for the insulating member 25 is electrically connected to each other. The lower vent member 24 and the upper vent member 26 are connected each other at each of central portions thereof, and the insulating member 25 is interposed between each of the circumferential portions of the vent members 24 and 26. If the internal pressure of the battery increases with abnormal heat generation, the lower vent member 24 is deformed so as to push the upper vent member 26 upward to the cap 27 side to break, resulting in cutting off of a current path between the lower vent member 24 and the upper vent member 26. If the internal pressure further increases, the gas discharge vent 40 provided in the outer surface of the outer housing can 16 breaks, and gas is discharged.

### (First Embodiment)

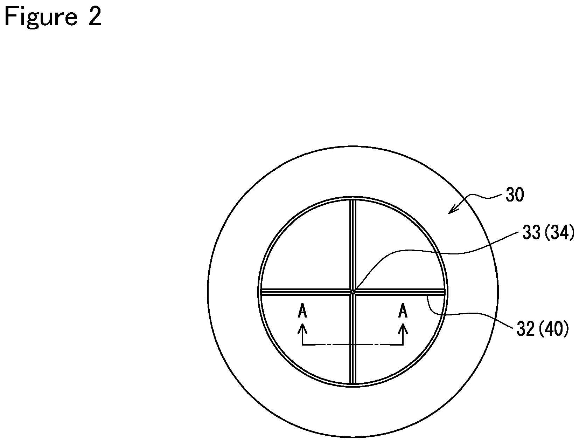

Next, the gas discharge vent 40 of the first embodiment will be described in detail with reference to FIGS. 2 to 5.

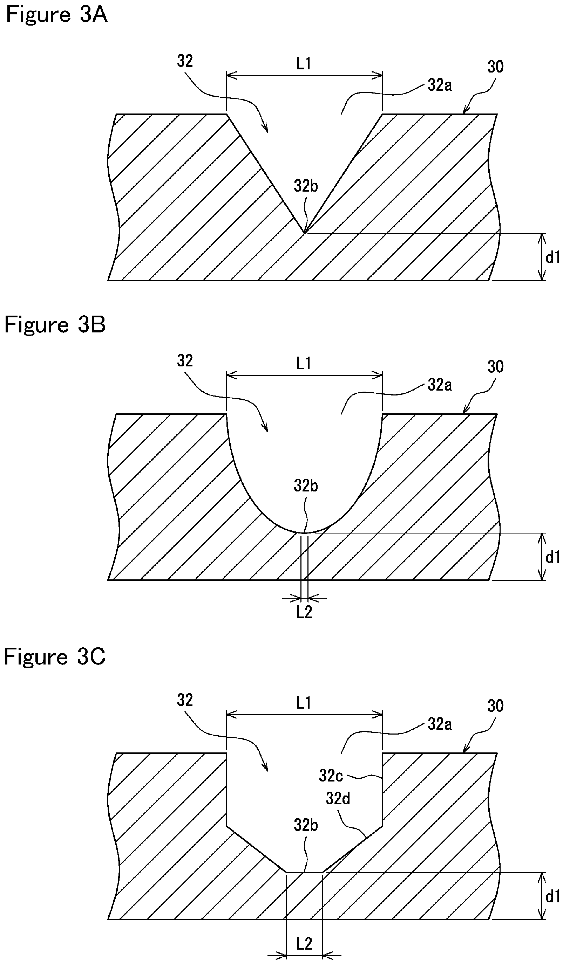

First, the effect of grooves 32 forming the gas discharge vent 40 will be described. As illustrated in FIGS. 3A, 3B, and 3C, the groove 32 is formed in which a remaining wall thickness is smaller than surrounding portions so that the stress of the internal pressure concentrates in the remaining wall thickness to easily cause breakage. As the width and area of a bottom 32b of the groove 32 are smaller, the stress is more likely to concentrate in the bottom 32b of the groove 32, and the gas discharge vent 40 is more likely to break. For example, the grooves 32 have an intersection 33 to form a cross shape, whereby the stress concentrates in the intersection 33 to easily cause breakage of the gas discharge vent 40. However, even if the intersection of the grooves is simply formed, a problem remains in that the intersection is likely to break due to impacts resulting from vibration or a drop.

FIG. 2 is a view of the bottom 30 of the outer housing can 16, viewed from the bottom, and illustrates appearance of the gas discharge vent 40 provided in the bottom 30. The gas discharge vent 40 is formed by the grooves 32, but can also include a groove in which the intersection 33 is not formed, in addition to the grooves 32. The grooves 32 are formed by pressing or the like. When the internal pressure of the sealed battery 10 increases, the gas discharge vent 40 breaks to discharge gas to the outside, thereby preventing the sealed battery 10 from rupturing.

The grooves 32 are linear and have a cross shape in plan view. The grooves 32 have the intersection 33 formed by intersecting each other. The intersection 33 has a flat portion 34, described later, in the bottom 32b. As illustrated in FIG. 3, the groove 32 includes, on a surface side of the bottom 30, an open end 32a having a constant width. The grooves 32 illustrated in FIG. 2 include a ring-shaped groove around the cross-shaped grooves, but this is not required.

Next, the sectional shape of the groove 32 will be described with reference to FIG. 3A. FIG 3A is a sectional view taken along line A-A in FIG. 2, and illustrates a cross section perpendicular to the surface of the bottom 30. The groove 32 has the open end 32a in the surface of the bottom 30, and the bottom 32b having a minimum remaining wall thickness. As illustrated in FIG. 3A, the sectional shape of the groove 32 has a V-shaped tapered shape in which the width of the bottom 32b is smaller than the width of the open end 32a.

The remaining wall thickness of the groove 32 is formed to be smaller than the thickness of a portion except for the grooves 32 in the bottom 30, and therefore, when the internal pressure of the battery reaches a predetermined value, the grooves 32 break and thereby the gas discharge vent 40 functions.

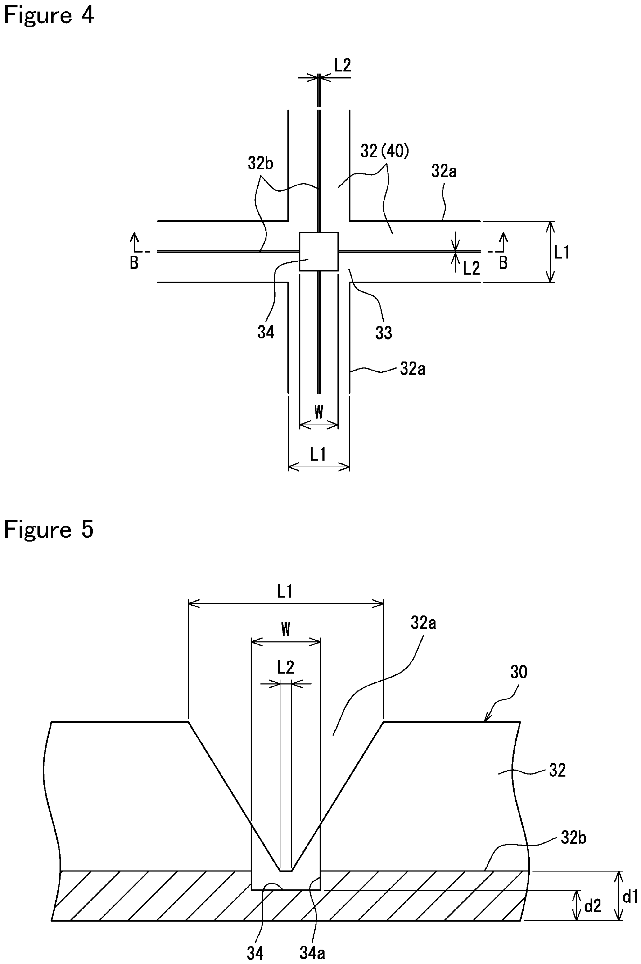

FIG. 4 is an enlarged view of the vicinity of the intersection 33. In plan view, the grooves 32 extend in an up-down direction and in a left-right direction, respectively, each having a linear shape having a width L1, and the two grooves 32 intersect to form the intersection 33. The width L1 of the groove 32 is determined on the basis of the width of the open end 32a on the surface side of the outer housing can 16. The bottom 32b of the groove 32 is positioned at a center in the width direction. The bottom 32b of the groove 32 has a linear shape having a width L2 smaller than the width L1 of the groove 32.

The intersection 33 includes a portion where a bottom 32b extending in the up-down direction and a bottom 32b extending in a left-right direction intersect (hereinafter, referred to as a "portion where the bottoms 32b intersect"). The flat portion 34 is provided in the intersection 33 to enclose the portion where the bottoms 32b intersect. The flat portion 34 encloses the portion where the bottoms 32b intersect, and has preferably a shape expanding in parallel with the surface direction of the bottom 30 of the outer housing can 16 from the portion where the bottoms 32b intersect.

FIG. 5 is a sectional view of the flat portion 34 taken along line B-B in FIG. 4. The flat portion 34 has a width W, and the remaining wall thickness is formed uniformly. That is, the flat portion 34 is a flat square region with a side length of W that encloses the portion where the bottoms 32b intersect and has a uniform remaining wall thickness. In an embodiment illustrated in FIG. 5, a remaining wall thickness d2 of the flat portion 34 is smaller than a remaining wall thickness d1 of the bottom 32b connected to the flat portion 34. In FIG. 5, the flat portion 34 has a side wall 34a perpendicular to the surface of the bottom 30 of the outer housing can 16, but the side wall 34a may be formed into a tapered shape. The remaining wall thickness of the flat portion 34 is uniform, but is not necessarily formed completely flat. The flat portion 34 may have a gentle slope or a curved surface. Note that, in FIG. 5, the width L2 of the bottom 32b is clearly visible, but the width L2 of the bottom 32b may be minimized.

When the flat portion 34 is not provided in the intersection 33, impacts resulting from vibration or a drop concentrates in the portion where the bottoms 32b intersect, and the portion where the bottoms 32b intersect becomes likely to break. In the present embodiment, the flat portion 34 is formed to enclose the portion where the bottoms 32b intersect, and therefore there is no portion where the bottoms 32b intersect. Accordingly, the portion where the bottoms 32b intersect is not subjected to impacts resulting from vibration or a drop, and the resistance to impacts of the gas discharge vent is improved.

The ratio (W/L1) of the width W of the flat portion 34 to the width L1 of the groove 32 is preferably greater than or equal to 0.3. This tends to further improve the resistance to impacts of the gas discharge vent.

The flat portion 34 is formed so that the remaining wall thickness d2 is less than or equal to the remaining wall thickness d1 of the bottom 32b. This can cause the flat portion 34 to break earlier than the bottoms 32b when the internal pressure of the battery increases. When a breaking portion is formed in the flat portion 34, the breaking portion spreads toward the bottom 32b therefrom, and the grooves 30 break and the entire gas discharge vent 40 functions. In order to cause the flat portion 34 to break earlier than the bottoms 32b more reliably, the remaining wall thickness d2 of the flat portion 34 is preferably formed to be smaller than the remaining wall thickness d1 of the bottom 32b as described above.

The sectional shape of the groove 32 is not limited to the shape illustrated in FIG. 3A. As illustrated in FIG. 3B, the sectional shape of the groove 32 may be a U shape. This groove 32 is the same in that the sectional shape has the width L1 at the open end 32a, and has a tapered shape such that the width is narrowed from the open end 32a toward the bottom 32b.

Furthermore, FIG. 3C illustrates a sectional shape of another groove 32. The groove 32 has a width L1 at an open end 32a, and has a side wall 32c having the width equivalent to that of the open end 32a in a range at a predetermined depth from the surface of the cylinder bottom 30. Furthermore, the groove 32 has a taper portion 32d from a tip on the bottom side of the side wall 32c, and is connected to the bottom 32b.

In the sectional shape of the groove 32, the ratio (L2/L1) of the width L2 of the bottom 32b to the width L1 of the groove 32 is preferably less than or equal to 0.2. Thus, when the internal pressure of the sealed battery 10 increases, the stress concentrates in the bottom 32b, which is likely to cause breakage of the bottom 32b.

As illustrated in FIGS. 3B and 3C, even when the bottom 32b has a relatively large width, the stress is more likely to concentrate in the region where the bottoms 32b of the grooves 32 intersect than when the flat portion 34 is provided, and the region where the bottoms 32b of the grooves 32 intersect tends to break due to impacts. Therefore, the resistance to impacts of the gas discharge vent 40 can be improved by providing the flat portion 34.

The intersection 33 is preferably provided to be positioned at a substantially center of the bottom 30 of the outer housing can 16. This is because the intersection 33 is a position where the deformation becomes maximized when the internal pressure of the sealed battery 10 increases, and therefore the stress is likely to concentrate in the intersection 33 and the gas discharge vent 40 becomes likely to break.

According to the present embodiment, the flat portion having a uniform thickness is provided in the intersection of the grooves forming the gas discharge vent 40, and therefore there can be provided the sealed battery that has the gas discharge vent 40 configured to reliably operate when the battery internal pressure reaches a predetermined value and having high resistance to impacts.

### (Other Embodiments)

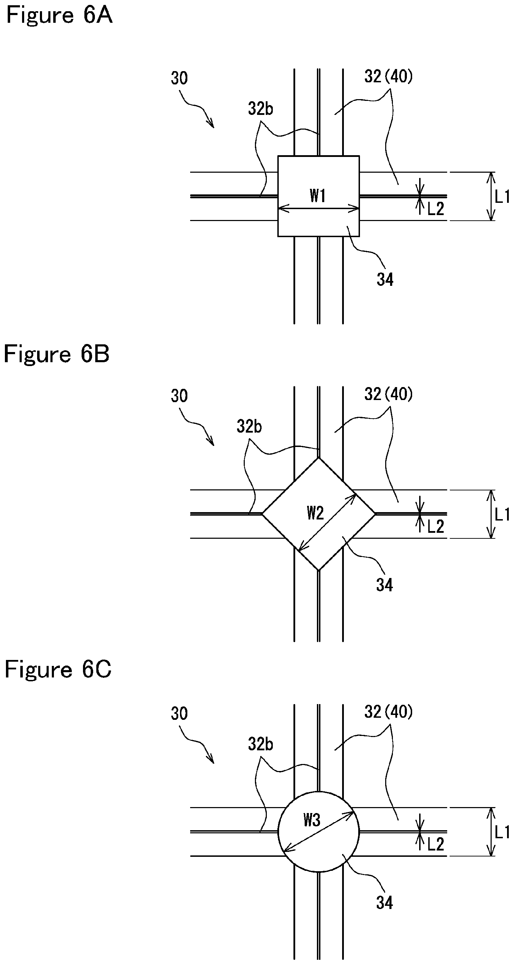

FIG. 6A illustrates a flat portion 34 of another embodiment. The same components as those of the first embodiment are denoted by the same reference numerals as the first embodiment, and the detailed description will be omitted. The flat portion 34 has a square with a side length of W1. In the first embodiment, the width W of the flat portion 34 is formed to be smaller than the width L1 of the groove 32, but the flat portion 34 of the present embodiment is formed so that the width W1 of the flat portion 34 is larger than the width L1 of the groove 32. The remaining wall thickness of the flat portion 34 is d2 in the same manner as in the first embodiment.

The ratio (W1/L1) of the width W1 of the flat portion 34 to the width L1 of the groove 32 is preferably less than or equal to 5 so that, if the internal pressure of the battery increases, the stress concentrates in the flat portion 34 to cause the flat portion 34 to break. This easily causes the flat portion 34 to break earlier than the bottoms 32b.

Also in the present embodiment, similarly to the first embodiment, a gas discharge vent can be configured to reliably operate when a battery internal pressure reaches a predetermined value and have high resistance to impacts.

Furthermore, FIG. 6B illustrates a flat portion 34 of another embodiment. The flat portion 34 of FIG. 6B has a shape obtained by rotating the flat portion 34 of FIG. 6A by 45 degrees. In this case, the width W2 of the flat portion 34 has a length of one side of the square in the same manner as in the case of the flat portion 34 of FIG. 6A. Accordingly, the width W2 of the flat portion 34 of FIG. 6B is the same as the width W1 of the flat portion 34 of FIG. 6A. Also in the present embodiment, similarly to the embodiment of FIG. 6A, a gas discharge vent can be configured to reliably operate when a battery internal pressure reaches a predetermined value and have high resistance to impacts.

Furthermore, FIG. 6C illustrates a flat portion 34 of another embodiment. The flat portion 34 has a circular shape. In this case, the width W3 of the flat portion 34 is a diameter of the circle. The flat portion 34 of the present embodiment is the same as that of the above-described embodiments except for the shape, and the same effect is achieved.

In the flat portion 34 of the above-described embodiment, the remaining wall thickness is thinner than the bottom 32b, but the flat portion 34 has a width wider than the width of the bottom 32b. Accordingly, the flat portion 34 has a surface extension, and the entire surface thereof is subjected to vibration and an impact, and therefore the flat portion 34 has high resistance to impacts. That is, to improve the resistance to impacts, the flat portion 34 has a width (plane extension) larger than the width of the bottom 32b.

In the case where the shape of the flat portion 34 has a shape other than square or circle as described in the above-described embodiments, the width of the flat portion 34 is not uniquely determined, and therefore the concept of the width of the flat portion 34 in the present disclosure will be described.

In the case where the shape of the flat portion 34 is square as illustrated in FIG. 4, the length of one side of the square is a width of the flat portion 34. In the case where the shape of the flat portion 34 is circular as illustrated in FIG. 6C, the diameter of the circle is a width of the flat portion 34. In the case where the shape of the flat portion 34 is rectangular, the shape has the long sides and the short sides. The resistance to impacts is determined by the length of the short side, and therefore the length of the short side of the rectangle is defined as the width of the flat portion 34. That is, the width of the flat portion 34 can be defined as the diameter of the circle that inscribes the contour of the flat portion 34. In this way, also in the case where the flat portion 34 has a polygonal shape, the width of the flat portion 34 can be specified. Therefore, the flat portion 34 is preferably formed so that the diameter of the circle that inscribes the contour of the flat portion 34 is larger than the width of the bottom 32b of the groove 32 connected to the flat portion 34.

As described above, various forms and widths of the flat portions 34 are illustrated, but the flat portions 34 are not limited to these forms. As described above, a configuration in which the ratio (W/L1) of the width W of the flat portion 34 to the width L1 of the groove 32 is greater than or equal to 0.3 and less than or equal to 5 can provide a gas discharge vent that causes the flat portion 34 to break earlier than the bottom 32b and have high resistance to impacts resulting from vibration or a drop.

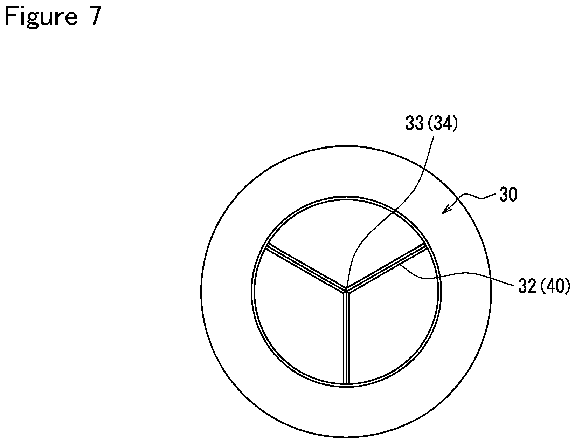

FIG. 7 illustrates a gas discharge vent of another embodiment. Grooves 32 have a Y shape in plan view. In this case, three grooves 32 overlap at a center of the cylinder bottom 30 and form an intersection 33. Also in this embodiment, a flat portion 34 is provided at the intersection 33. A configuration in which the ratio of the width of the flat portion 34 to the width of the groove 32 is greater than or equal to 0.3 and less than and equal to 5 can achieve the same effect as the gas discharge vent described in the above-described embodiment.

Note that the shape of the groove 32 of the gas discharge vent is not limited to a cross shape or a Y shape, but various shapes can be applied. The groove 32 illustrated in FIG. 2 or 7 has a ring-shaped groove around the cross-shaped groove or the Y-shaped groove, but a flat portion may be provided also at an intersection between the cross-shaped or Y-shaped groove and the ring-shaped groove as in the above-described embodiment.

The foregoing description relates to a cylindrical sealed battery. The present disclosure is applicable not only to cylindrical batteries but also to prismatic batteries. In the prismatic batteries, the grooves may be provided not in the bottom of the outer housing can but in the side wall thereof.

### REFERENCE SIGNS LIST

10 Sealed battery, 11 Positive electrode, 12 Negative electrode, 13 Separator, 14 Electrode assembly, 16 Outer housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 29 Side wall, 30 Bottom, 31 Caulking portion, 32 Groove, 32a Open end, 32b Bottom, 32c Side wall, 32d Taper portion, 33 Intersection, 34 Flat portion, 34a Side wall, 40 Gas discharge vent

## Claims

1. A sealed battery, comprising:
a bottomed cylindrical outer housing can that houses an electrode assembly; and
a sealing assembly with which an opening of the outer housing can is capped, wherein
the outer housing can includes a gas discharge vent that breaks when a battery internal pressure reaches a predetermined value,
the gas discharge vent has a plurality of linear grooves,
a sectional shape of each of the grooves is a tapered shape in which a width of a bottom becomes smaller than a width of an opening end on a surface side of the outer housing can,
the grooves have at least one intersection, and
the intersection has a flat portion at a bottom of the intersection.

2. The sealed battery according to claim 1, wherein
the sectional shape of the groove is a V shape.

3. The sealed battery according to claim 1, wherein
the sectional shape of the groove is a U shape.

4. The sealed battery according to any one of claims 1 to 3, wherein
a ratio (W/L1) of a diameter W of a circle that inscribes a contour of the flat portion to a width L1 of the open end is greater than or equal to 0.3 and less than or equal to 5.

5. The sealed battery according to claim 4, wherein
a ratio (L2/L1) of a width L2 of the bottom to the width L1 of the open end is less than or equal to 0.2.

6. The sealed battery according to any one of claims 1 to 5, wherein
a remaining wall thickness of the flat portion is less than or equal to a minimum remaining wall thickness of the groove except for the intersection.
